# EUROPEAN PATENT SPECIFICATION

(11) **EP 3 051 750 B1**
(45) Date of publication and mention of the grant of the patent: **02.02.2022**
(21) Application number: 14849071.7
(22) Date of filing: 19.06.2014
(51) Int. Cl.: H04L 12/24

(54) **COLLECTION ADAPTOR MANAGEMENT METHOD AND SYSTEM**
SAMMELADAPTERVERWALTUNGSVERFAHREN UND -SYSTEM
PROCÉDÉ ET SYSTÈME DE GESTION D'ADAPTATEUR DE COLLECTE

(30) Priority: 25.09.2013 CN 201310443041
(43) Date of publication of application: 03.08.2016
(73) Proprietor: ZTE Corporation, Shenzhen, Guangdong 518057 (CN)
(72) Inventor: ZHANG, Qing, Shenzhen Guangdong 518057 (CN); LI, Jin, Shenzhen Guangdong 518057 (CN)
(74) Representative: Tiburzi, Andrea
(86) International application number: PCT/CN2014/080329
(87) International publication number: WO 2015/043251

(56) References cited:
- CN-A- 101 047 545
- CN-A- 101 179 414
- CN-A- 103 095 481

## Description

### Technical Field

The present disclosure relates to the field of centralized network management of telecommunication network management, especially relates to a collection adaptor management method and system used for managing Element Management Systems (EMSs) of multiple specific service networks of multiple vendors.

### Background

With the development of network communication, there exist multiple network management systems of multiple specific service networks of multiple vendors in a telecommunication management network run by one operator. These network management systems are independent, only managing equipment and information within their respective management areas. In order to ensure the quality of network services and improve the efficiency of operation and maintenance, and to realize centralized and unified network monitoring and management of the whole network, operators require these network management systems to provide a Northbound Interface (NBI). Based on the NBI, an upper level centralized network management system, i.e., an integrated network management system, short for integrated network management or Network Management System (NMS), is built.

The main managed objects of the integrated network management are Element Management Systems (EMSs) of specific service networks of each vendor, the integrated network management also needs to manage specific network element equipment under some special conditions. The EMS and the specific network element equipment are collectively called a managed system (in order to describe conveniently, the managed system's abbreviation is also called EMS).

Due to various reasons, the standards (3GPP, TMF, China mobile standard, China Unicom standard and the like), network protocols (Corba, Snmp, TL1 and the like) and the data format followed by the EMS's northbound interface (EMS_NBI) of different specific service networks of different vendors are different. The differences may even exist in the EMS's different versions of the same specific service network of the same vendor. Therefore, the integrated network management system usually needs to configure dedicated adaptive component and corresponding data model for a specific EMS_NBI. The system managing these adaptive components is called Collection Agent Management System (CAMS). Generally, the CAMS may be implemented by several implementing schemes as follows:
Scheme 1: A single adaptive component is deployed on the EMS or a server in the same local area network, the NMS creates a data model and treats the CAMS as a subsystem to manage distributed adaptive components.
Scheme 2: The CAMS, all the adaptive components and all the data components are treated as a part of the NMS.
Scheme 3: The CAMS and all the adaptive components are independently deployed in a server and the data component is built in the NMS.

In the foregoing schemes, the NMS and CAMS can't realize the complete decoupling from the northbound interface of the managed system. Due to different kinds of network equipment and different kinds of the managed systems in a practical project, it is needed to customize the adaptive component and the data model for a specific operator, therefore, an integrated network management product suitable for different operators cannot be realized.

CN 103095481 A discloses a method, device and northbound interface of northbound interface process information.

CN 101179414 A discloses a method for integrating network management function at a lower level by network management at a higher level.

### Summary

A collection adaptor management method according to independent claim 1 and a collection adaptor management system according to independent claim 7 are provided in the embodiments of the present disclosure, so as to solve the problem that the existing NMS and CAMS cannot completely decouple from the northbound interface of the managed system. Further improvements and embodiments are provided in the dependent claims.

A collection adaptor management method is provided in the embodiments of the present disclosure, including: encapsulating a northbound interface adaptation program of one managed system, a service data model file of the managed system, and a northbound interface dependent file of the managed system into one Collection Agent Plugin Package (CAPP); after the CAPP is installed into a Collection Agent Management System (CAMS), creating a Collection Agent Plugin Entity (CAPE) corresponding to the CAPP; and performing, through the created CAPE, data communication between the managed system and a Network Management System (NMS).

In an exemplary embodiment, the service data model file includes a network element model file, an alarm model file and a performance model file, and further including: creating a unified network element model, a unified alarm model and a unified performance model for a specific service network.

In an exemplary embodiment, after the CAPP is installed into the CAMS, creating the CAPE corresponding to the CAPP includes: creating the CAPE corresponding to the CAPP and configuring a configuration parameter of the CAPE according to related information of the managed system corresponding to the CAPP.

In an exemplary embodiment, performing, through the created CAPE, the data communication between the managed system and the NMS includes:
when the CAPE is in a connected state, the CAPE receiving a service data collection command issued by the NMS through a northbound interface of the CAMS;

The CAPE collecting, through a northbound interface of the managed system, data instructed by the service data collection command, and after parsing the collected data into unified format data which is able to be recognized by the NMS, reporting the unified format data to the NMS through the northbound interface of the CAMS.

In an exemplary embodiment, the method further including: installing a new CAPP online in the CAMS.

In an exemplary embodiment, installing the new CAPP on line in the CAMS includes: parsing the service data model file in the CAPP into unified model data which is able to be recognized by both the NMS and the CAMS.

In an exemplary embodiment, the method further includes: uninstalling the installed new CAPP from the CAMS.

A collection adaptor management system is provided in the embodiment of the present disclosure, including:
an encapsulating component, configured to encapsulate a northbound interface adaptation program of one managed system, a service data model file of the managed system and a northbound interface dependent file of the managed system into one Collection Agent Plugin Package (CAPP);
a CAPE managing component, configured to, after the CAPP is installed into a Collection Agent Management System (CAMS), create a Collection Agent Plugin Entity (CAPE) corresponding to the CAPP;
a communicating component, configured to perform, through the created CAPE, data communication between the managed system and a Network Management System (NMS).

In an exemplary embodiment, the system further including:
a CAPP managing component, configured to install a new CAPP online in the CAMS.

In an exemplary embodiment, the CAPP managing component is further configured to uninstall the installed new CAPP from the CAMS.

When the encapsulating component, the CAPE managing component, the communicating component and the CAPP managing component execute processes, the processes can be realized by implementing a Central Processing Unit (CPU), a Digital Signal Processor (DSP) or a Field Programmable Gate Array (FPGA).

According to a collection adaptor management method and system provided in the embodiments of the present disclosure, the northbound interface adaptation program of one managed system, the service data model file of the managed system and the northbound interface dependent file of the managed system are encapsulated into one CAPP, after the CAPP is installed into the CAMS, the CAPE corresponding to the CAPP is created, and data communication between the managed system and the NMS is performed through the CAPE. By encapsulating relevant data into the corresponding CAPP to solve the adaption problem of the northbound interface of the managed system, the NMS and CAMS both of which are compatible with the northbound interfaces of all kinds of managed systems can be realized. Therefore, the problem that the existing NMS and CAMS cannot completely decouple from the northbound interface of the managed system is solved.

### Brief Description of Drawings

Fig. 1 is a diagram showing a systematic architecture of a collection adaptor management system provided by the first embodiment of the present disclosure;
Fig. 2 is a diagram showing a structure of a CAPG of the first embodiment of the present disclosure;
Fig. 3 is a diagram showing transition of a connection state of an exemplified CAPG of the first embodiment of the present disclosure;
Fig. 4 is a chart showing a flow of a collection adaptor management method provided by the second embodiment of the present disclosure;
Fig. 5 is a diagram showing a structure of a collection adaptor management system provided by the third embodiment of the present disclosure.

### Detailed Description

In the existing implementing schemes of the NMS and CAMS, the NMS and CAMS cannot realize complete decoupling from the northbound interface of the managed system. Due to different kinds of network equipment and different kinds of managed systems in a practical project, it is needed to customize adaptive component and data model for a specific operator, therefore, an integrated network management product suitable for different operators cannot be realized.

Therefore, how to completely disassociate relevant processing logic and data model of the northbound interface of the managed system, and to make each of the NMS and CAMS into an integrated network management product irrelevant to specific projects, becomes a problem needed to be considered by the technician.

In order to solve the above problem, a collection adaptor management method and system are provided in the embodiments of the present disclosure. The embodiments of the present disclosure will be described in detail hereinafter in conjunction with the drawings. It should be noted that the embodiments of the present disclosure and features in the embodiments can be arbitrarily combined with each other if there is no conflict.

The first embodiment of the present disclosure is described hereinafter in conjunction with the drawings.

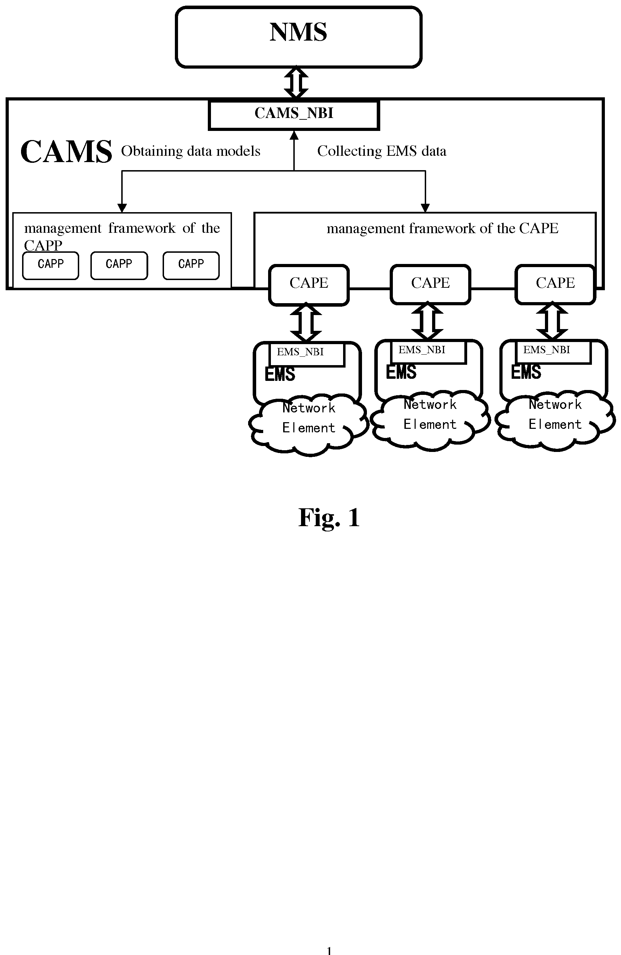

As shown in Fig. 1, when the NMS and CAMS are initially installed to run, the NMS and CAMS don't contain any models or data of the specific service network.

A collection adaptor management system, which is oriented to integrated network management application and can run independently, is provided in the embodiment of the present disclosure, so as to solve the above technical problem. The northbound interface of the managed system can be isolated from the data model through the collection adaptor management system, thus, the objective of making the NMS and CAMS become irrelevant to the managed systems of special operators is achieved.

A collection adaptor management system, which can run independently, is provided in the embodiments of the present disclosure. The system possesses a core framework which can isolate specific managed system, as well as provides an extensible collection adaptor plugin mechanism. The frame structure of the collection adaptor management system is shown in Fig.1.

For relevant services such as network element management, alarm management and performance management and the like of the integrated network management, the NMS and CAMS jointly build a unified abstract data model (a network element model, an alarm model and a performance model and the like) for all specific service networks.

A northbound interface adaptation component and a data model of a specific managed system are encapsulated into one CAPP following a unified interface specification. The CAMS supports online installation of the CAPP, hot deployment of the CAPP and uninstall of the CAPP. After the CAPP is installed and deployed, the CAMS can create a CAPE for a specific managed system. The CAPE is responsible for establishing a communication link with the northbound interface of the managed system, collecting data (such as the network element, alarm and performance) of the managed system and monitoring messages reported initiatively by the managed system.

In this scheme, the primary function of the core framework of the CAMS is to manage the CAPP and CAPE, and at the same time, as an independent system between the NMS and the managed system, the CAMS provides CAMS's northbound interface (CAMS_NBI) to the NMS. The CAMS is responsible for parsing NMS commands from the northbound interface and forwarding the parsed NMS commands to the CAPP and CAPE. The NMS may obtain, through the northbound interface, the data model of the managed system corresponding to the installed and deployed CAPP, and the NMS may also collect service data such as the network element, alarm, performance and the like of the specific managed system corresponding to CAPE.

The northbound interface adaptation process and the service data models of the specific managed system are isolated in the CAPP, and the CAPP can be developed independently and released. Therefore, the NMS and CAMS can be irrelevant to the managed system of the specific operator, thereby realizing the productization development of the NMS and CAMS.

The CAPP is developed independently by following the interface specification formulated by the CAMS and is released independently in a form of compressed file package. The naming of CAPP is based on factors including vendors, specific service networks, the name of network management, the northbound interface and the like.

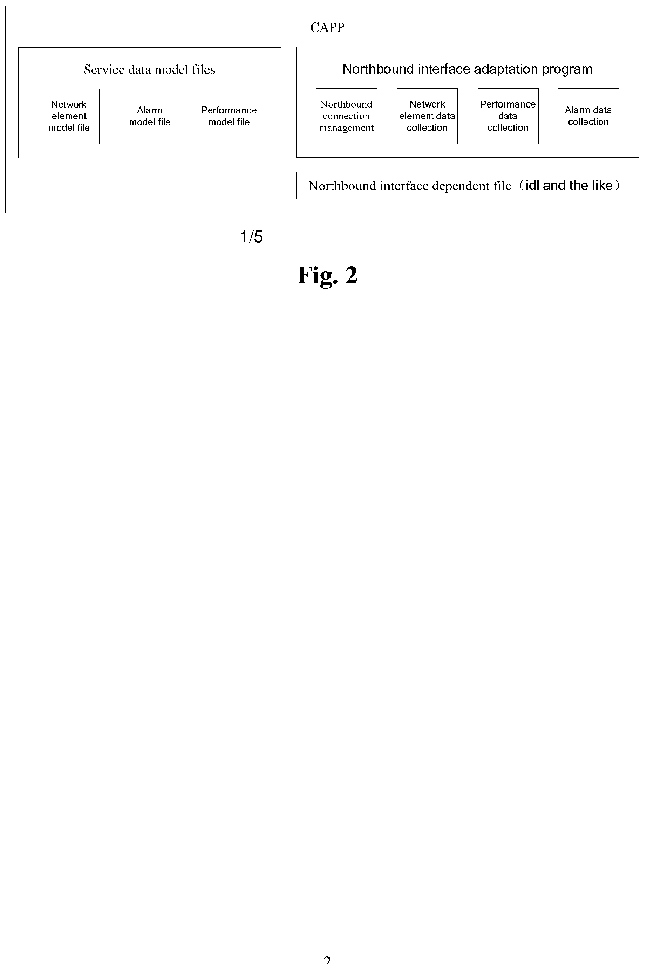

As shown in Fig.2, one CAPP mainly includes three parts, which are a service data model file, a northbound interface adaptation program and a northbound interface dependent file.

The service data model file may include a network element model file, an alarm model file and a performance model file. The network element model file mainly defines model data related to network element equipment, such as specialties, networks, types and the like. The alarm model file mainly defines model data related to alarm, such as possible reasons for alarming, types of alarms, severity levels of the alarms and the like. The performance model file mainly defines model data related to performance, such as performance index and the like.

The northbound adaptation program is responsible for collecting, through EMS northbound interface (EMS_NBI), service data of EMS, such as network elements, alarm and performance, and the northbound adaptation program is also responsible for connection management, such as establishing connection, heartbeat detection and the like.

The northbound interface dependent file mainly refers to supporting files which relates to the managed system, and upon which the northbound adaption program depends, such as IDL of Corba, definition files of mib of SNMP and the like.

As shown in Fig.1, the CAPP management framework of the CAMS is primarily responsible for installation of the CAPP, uninstall of the CAPP, obtaining a list of the installed CAPP and obtaining detailed information of the CAPP. The CAPP takes effect by being online installed and hot deployed in the CAMS system through the CAPP management framework. During the installation, the model files in the CAPP are parsed to unified format model data, which is able to be recognized by both the NMS and CAMS. In the case that the CAMS receives a command for obtaining CAPP data model, wherein the command is issued by the NMS through CAMS_NBI, the data model is uploaded to NMS through CAMS_NBI.

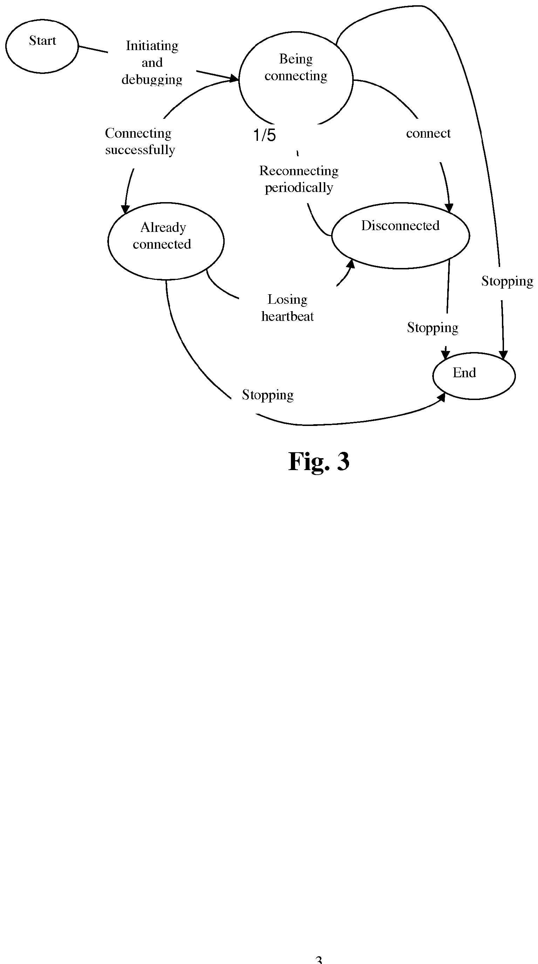

As shown in Fig.1, the CAPE management framework of CAMS is primarily responsible for creating, initiating and stopping the CAPE. After the CAPP is installed into the CAMS, the CAPE may be created by the management framework of the CAPE, and the configuration parameters of CAPE is configured to be related information of the corresponding managed system (IP address, port and the like). As shown in Fig.3, the CAPE may execute three operations, namely, initiating, stopping and debugging (when debugging, the data collected by the CAPE doesn't spread out), and the CAPE has three connection states, which are respectively an already connected state, a being connecting state and a disconnected state. The transition of the connection states of CAPE along with the operations is shown in Fig. 3.

As shown in Fig. 3, in the case that the CAPE is in the already connected state, the CAPE may receive a service data collection command to collect service data such as element data, alarm data, performance data and the like, wherein the service data collection command is issued by the NMS through the CAMS_NBI. Then the CAPE collects corresponding service data through the EMS_NBI, parses the corresponding service data to unified format data which is able to be recognized by the NMS and reports to NMS through the CAMS_NBI. At the same time, the CAPE can monitor the real-time messages of the EMS_NBI of the managed system (message for creating a network element, message for deleting the network element, and message for altering the network element; message for creating an alarm, message for restoring the alarm, and message for altering the alarm; heartbeat messages and the like), then the CAPE parses the corresponding service data to unified format data which is able to be recognized by the NMS and reports to the NMS through the CAMS_NB.

The second embodiment of the present disclosure is described hereinafter in conjunction with the drawings.

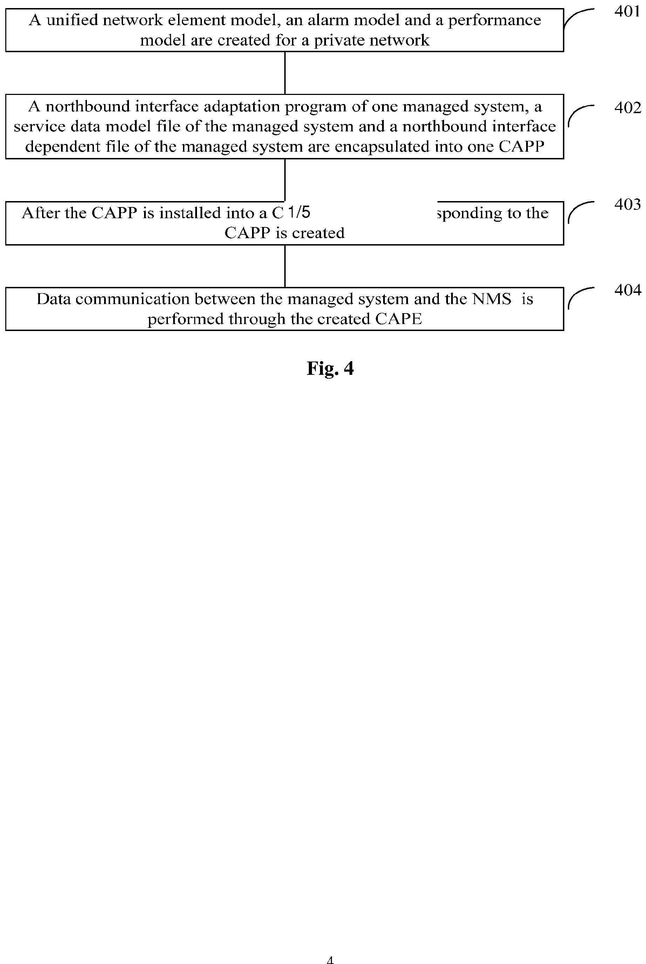

A collection adaptor management method is provided in the embodiment of the present disclosure. In conjunction with the systematic framework showed in Fig. 1, the process, which implements the management on the managed system by the collection adaptor management method, is shown in Fig. 4. The method includes:
Step 401, a unified network element model, an alarm model and a performance model are created for a specific service network.

In this step, for relevant services such as network element management, alarm management and performance management and the like of the integrated network management, the NMS and CAMS jointly build a unified abstract data model (the network element model, the alarm model and the performance model and the like) for all specific service networks. Correspondingly, a network element model file, an alarm model file and a performance model file are created.

Step 402, a northbound interface adaptation program of one managed system, a service data model file of the managed system and a northbound interface dependent file of the managed system are encapsulated into one CAPP.

The encapsulated CAPP may be hot installed on line into the CAMS. The already installed CAPP can be uninstalled from the CAMS.

Step 403, after the CAPP is installed into the CAMS, the CAPE corresponding to the CAPP is created.

In this step, the corresponding CAPE is created for the CAPP and a configuration parameter of the CAPE is configured according to related information of the managed system corresponding to the CAPP.

Step 404, data communication between the managed system and the NMS is performed through the created CAPE.

In this step, when the CAPE is in a connected state, the CAPE receives a service data collection command issued by the NMS through a northbound interface of the CAMS, then the CAPE collects, through a northbound interface of the managed system, data indicated by the service data collection command, and after parsing the collected data to unified format data which is able to be recognized by the NMS, the CAPE reports the unified format data to the NMS through the northbound interface of the CAMS.

The third embodiment of the present disclosure is described hereinafter in conjunction with the drawings.

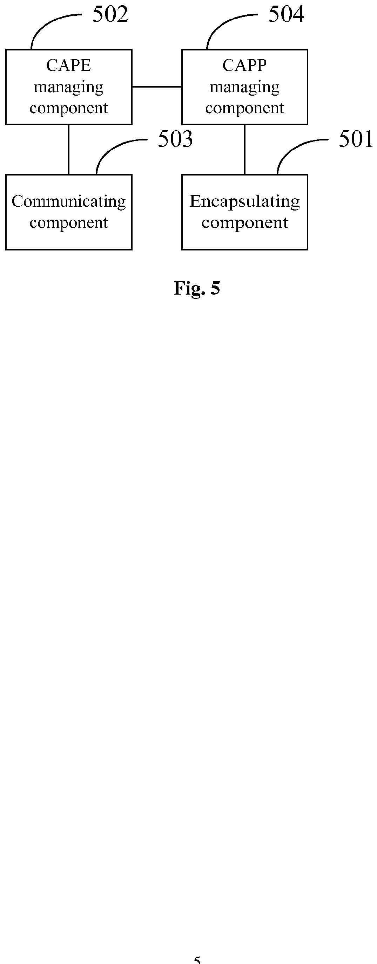

A collection adaptor management system is provided in the embodiment of the present disclosure, and the structure of the collection adaptor management system is shown in Fig.5. The system includes:
an encapsulating component 501, configured to encapsulate a northbound interface adaptation program of one managed system, a service data model file of the managed system and a northbound interface dependent file of the managed system into one CAPP;
a CAPE managing component 502, configured to, after the CAPP is installed into a CAMS, create a CAPE corresponding to the CAPP;
a communicating component 503, configured to perform, through the created CAPE, data communication between the managed system and an NMS.

In an exemplary embodiment, the system further includes:
a CAPP managing component 504, configured to install a new CAPP online in the CAMS.

In an exemplary embodiment, the CAPP managing component 504 is further configured to uninstall the installed new CAPP from the CAMS.

The collection adaptor management method and system are provided in the embodiments of the present disclosure. The northbound interface adaptation program of one managed system, the service data model file of the managed system and the northbound interface dependent file of the managed system are encapsulated into one CAPP, after the CAPP is installed into the CAMS, the CAPE corresponding to the CAPP is created, and data communication between the managed system and the NMS is performed through the CAPE. By encapsulating relevant data into the corresponding CAPP to solve the adaption problem of the northbound interface of the managed system, the NMS and CAMS both of which are compatible with the northbound interfaces of all kinds of managed systems can be realized. Therefore, the problem that the existing NMS and CAMS cannot completely decouple from the northbound interface of the managed system is solved.

Those skilled in the art understand that all or a part of steps of the abovementioned embodiments may be implemented through computer program process. The computer program may be stored in a computer readable medium, and may be executed in corresponding platforms (such as a system, a device, equipment, a component). When being executed, the computer program includes one or combination of steps of the method embodiment.

Alternatively, all or part of steps of the abovementioned embodiments may be implemented by integrated circuit. These steps may be made into a plurality of integrated circuit modules separately, or a plurality of modules and steps may be implemented by making these modules and steps into one single integrated circuit module. Therefore, the present disclosure is not limited to any specific combination of hardware or software.

Each device/function component/function element of the abovementioned embodiments may be implemented by general computer devices. They may be integrated in one single computer device or distributed in a network consisting of a plurality of computer device.

In the case that each device/function component/function element of the abovementioned embodiment is implemented by software function modules and is sold or used as an independent product, these devices/function components/function elements may be stored in a computer readable medium, which may be a read-only memory, a magnetic disk or an optical disk.

### Industrial Applicability

According to a collection adaptor management method and system provided in the embodiment of the present disclosure, the northbound interface adaptation program of one managed system, the service data model file of the managed system and the northbound interface dependent file of the managed system are encapsulated into one CAPP, after the CAPP is installed into the CAMS, the CAPE corresponding to the CAPP is created, and data communication between the managed system and the NMS is performed through the CAPE. By encapsulating relevant data into the corresponding CAPP to solve the adaption problem of the northbound interface of the managed system, the NMS and CAMS both of which are compatible with the northbound interface of all kinds of managed systems can be realized. Therefore, the problem that the existing NMS and CAMS cannot completely decouple from the northbound interface of the managed system is solved.

## Claims

1. A collection adaptor management method, comprising:
encapsulating (402) a northbound interface adaptation program of one managed system, a service data model file of the managed system, and a northbound interface dependent file of the managed system into one Collection Agent Plugin Package, CAPP following a unified interface specification;
after the CAPP is installed into a Collection Agent Management System, CAMS, creating (403) a Collection Agent Plugin Entity, CAPE, corresponding to the CAPP; wherein the CAPE is configured for establishing a communication link with the northbound interface of the managed system, collecting data of the managed system and monitoring messages reported initiatively by the managed system, and wherein the CAMS is configured for parsing Network Management System, NMS, commands from the northbound interface of the CAMS and forwarding the parsed NMS commands to the CAPP and CAPE; and
performing (404), through the created CAPE, data communication between the managed system and a Network Management System, NMS;
wherein performing (404), through the created CAPE, the data communication between the managed system and the NMS comprises: when the CAPE is in a connected state, the CAPE receiving a service data collection command issued by the NMS through a northbound interface of the CAMS; the CAPE collecting, through a northbound interface of the managed system, data indicated by the service data collection command, and after parsing the collected data into unified format data which is able to be recognized by the NMS, reporting the unified format data to the NMS through the northbound interface of the CAMS.

2. The collection adaptor management method as claimed in claim 1, wherein the service data model file comprises a network element model file, an alarm model file and a performance model file, and the method further comprises:
creating (401) a unified network element model, a unified alarm model and a unified performance model for a specific service network.

3. The collection adaptor management method as claimed in claim 1, wherein after the CAPP is installed into the CAMS, creating the CAPE corresponding to the CAPP comprises:
creating (403) the CAPE corresponding to the CAPP and configuring a configuration parameter of the CAPE according to related information of the managed system corresponding to the CAPP.

4. The collection adaptor management method as claimed in claim 1, further comprising: installing a new CAPP online in the CAMS.

5. The collection adaptor management method as claimed in claim 4, wherein installing the new CAPP on line in the CAMS comprises:
parsing the service data model file in the CAPP into unified model data which is able to be recognized by both the NMS and the CAMS.

6. The collection adaptor management method as claimed in claim 4, further comprising:
uninstalling the installed new CAPP from the CAMS.

7. A collection adaptor management system, comprising:
an encapsulating component (501), configured to encapsulate a northbound interface adaptation program of one managed system, a service data model file of the managed system and a northbound interface dependent file of the managed system into one Collection Agent Plugin Package, CAPP following a unified interface specification;
a CAPE managing component (502), configured to, after the CAPP is installed into a Collection Agent Management System, CAMS, create a Collection Agent Plugin Entity, CAPE, corresponding to the CAPP; wherein the CAPE is responsible for establishing a communication link with the northbound interface of the managed system, collecting data of the managed system and monitoring messages reported initiatively by the managed system, and wherein the CAMS is responsible for parsing Network Management System, NMS, commands from the northbound interface of the CAMS and forwarding the parsed NMS commands to the CAPP and CAPE;
a communicating component (503), configured to perform, through the created CAPE, data communication between the managed system and a Network Management System, NMS;
wherein the communicating component (503) is further configured such that: when the CAPE is in a connected state, the CAPE is adapted to receive a service data collection command issued by the NMS through a northbound interface of the CAMS; the CAPE is adapted to collect, through a northbound interface of the managed system, data indicated by the service data collection command, and after parsing the collected data into unified format data which is able to be recognized by the NMS, is further adapted to report the unified format data to the NMS through the northbound interface of the CAMS.

8. The collection adaptor management system as claimed in claim 7, further comprising:
a CAPP managing component (504), configured to install a new CAPP online in the CAMS.

9. The collection adaptor management system as claimed in claim 8, wherein the CAPP managing component (504) is further configured to uninstall the installed new CAPP from the CAMS.

## Patentansprüche

1. Sammeladapterverwaltungsverfahren, umfassend:
Einkapseln (402) eines Northbound-Schnittstellenanpassungsprogramms eines verwalteten Systems, einer Dienstdatenmodelldatei des verwalteten Systems und einer von der Northbound-Schnittstelle abhängigen Datei des verwalteten Systems in einem Sammelagent-Plugin-Paket, CAPP, gemäß einer einheitlichen Schnittstellenspezifikation;
nachdem das CAPP in einem Sammelagent-Verwaltungssystem, CAMS installiert ist, Erzeugen (403) einer Sammelagent-Plugin-Entität, CAPE, die dem CAPP entspricht; wobei die CAPE konfiguriert ist zum Herstellen einer Kommunikationsverbindung mit der Northbound-Schnittstelle des verwalteten Systems, zum Sammeln von Daten des verwalteten Systems und zum Überwachen von Nachrichten, die von dem verwalteten System initiiert wurden, und wobei das CAMS zum Parsen von Netzwerkverwaltungssystem-NMS-Befehlen von der Northbound-Schnittstelle des CAMS und zum Weiterleiten der geparsten NMS-Befehle an dem CAPP und der CAPE konfiguriert ist; und
Durchführen (404) einer Datenkommunikation zwischen dem verwalteten System und einem Netzwerkverwaltungssystem, NMS, durch die erzeugte CAPE;
wobei das Durchführen (404) der Datenkommunikation zwischen dem verwalteten System und dem NMS durch die erzeugte CAPE umfasst: wenn sich die CAPE in einem verbundenen Zustand befindet, empfängt die CAPE einen vom NMS ausgegebenen Dienstdatensammlungsbefehl über eine Northbound-Schnittstelle des CAMS; die CAPE sammelt über eine Northbound-Schnittstelle des verwalteten Systems Daten, die durch den Dienstdatensammlungsbefehl angezeigt werden, und nach dem Parsen der gesammelten Daten in Daten im einheitlichen Format, die vom NMS erkannt werden können, Melden der Daten im einheitlichen Format an das NMS über die Northbound-Schnittstelle des CAMS.

2. Sammeladapterverwaltungsverfahren nach Anspruch 1, wobei die Dienstdatenmodelldatei eine Netzwerkelementmodelldatei, eine Alarmmodelldatei und eine Leistungsmodelldatei umfasst, und das Verfahren ferner umfasst:
Erzeugen (401) eines einheitlichen Netzwerkelementmodells, eines einheitlichen Alarmmodells und eines einheitlichen Leistungsmodells für ein spezifisches Dienstnetzwerk.

3. Sammeladapterverwaltungsverfahren nach Anspruch 1, wobei, nachdem das CAPP in das CAMS installiert wurde, das Erzeugen der CAPE, die der CAPP entspricht, umfasst:
Erzeugen (403) der CAPE, die der CAPP entspricht, und Konfigurieren eines Konfigurationsparameters der CAPE gemäß verwandten Informationen des verwalteten Systems, das dem CAPP entspricht.

4. Sammeladapterverwaltungsverfahren nach Anspruch 1, ferner umfassend: Online-Installieren eines neuen CAPP in dem CAMS.

5. Sammeladapterverwaltungsverfahren nach Anspruch 4, wobei das Online-Installieren des neuen CAPP im CAMS umfasst:
Parsen der Dienstdatenmodelldatei in dem CAPP in einheitliche Modelldaten, die sowohl von dem NMS als auch dem CAMS erkannt werden können.

6. Sammeladapterverwaltungsverfahren nach Anspruch 4, ferner umfassend:
Deinstallation des installierten neuen CAPP vom CAMS.

7. Sammeladapterverwaltungsverfahren, umfassend:
eine Kapselungskomponente (501), die konfiguriert ist, um ein Northbound-Schnittstellenanpassungsprogramm eines verwalteten Systems, eine Dienstdatenmodelldatei des verwalteten Systems und eine von der Northbound-Schnittstelle abhängige Datei des verwalteten Systems in ein Sammelagent-Plugin-Paket, CAPP, nach einer einheitlichen Schnittstellenspezifikation zu kapseln;
eine CAPE-Verwaltungskomponente (502), die konfiguriert ist, um nach der Installation des CAPP in einem Sammelagent-Verwaltungssystem, CAMS, eine Sammelagent-Plugin-Entität, CAPE zu erzeugen, die dem CAPP entspricht; wobei die CAPE verantwortlich ist, zum Herstellen einer Kommunikationsverbindung mit der Northbound-Schnittstelle des verwalteten Systems, zum Sammeln von Daten des verwalteten Systems und zum Überwachen von Nachrichten, die von dem verwalteten System initiiert wurden, und wobei das CAMS zum Parsen von Netzwerkverwaltungssystem-NMS-Befehlen von der Northbound-Schnittstelle des CAMS und zum Weiterleiten der geparsten NMS-Befehle an dem CAPP und der CAPE verantwortlich ist;
eine Kommunikationskomponente (503), die konfiguriert ist, um über die erzeugte CAPE eine Datenkommunikation zwischen dem verwalteten System und einem Netzwerkverwaltungssystem, NMS, durchzuführen;
wobei die Kommunikationskomponente (503) ferner so konfiguriert ist, dass: wenn sich die CAPE in einem verbundenen Zustand befindet, die CAPE angepasst ist, um einen vom NMS ausgegebenen Dienstdatensammlungsbefehl über eine Northbound-Schnittstelle des CAMS zu empfangen; die CAPE so angepasst ist, dass sie über eine Northbound-Schnittstelle des verwalteten Systems Daten sammelt, die durch den Dienstdatensammlungsbefehl angezeigt werden, und nach dem Parsen der gesammelten Daten in in Daten im einheitlichen Format, die vom NMS erkannt werden können, weiter angepasst ist, um die Daten im einheitlichen Format an das NMS über die Northbound-Schnittstelle des CAMS zu melden.

8. Sammeladapterverwaltungssystem nach Anspruch 7, ferner umfassend:
eine CAPP-Verwaltungskomponente (504), die konfiguriert ist, um ein neue CAPP online im CAMS zu installieren.

9. Sammeladapterverwaltungssystem nach Anspruch 8, wobei die CAPP-Verwaltungskomponente (504) ferner konfiguriert ist, um das installierte neue CAPP von dem CAMS zu deinstallieren.

## Revendications

1. Procédé de gestion d'adaptateur de collecte, consistant à:
encapsuler (402) un programme d'adaptation d'interface northbound d'un système géré, un fichier de modèle de données de service du système géré, et un fichier dépendant de l'interface northbound du système géré dans un paquage de plugin d'agent de collecte (Collection Agent Plugin Package), CAPP suivant une spécification d'interface unifiée;
après l'installation du CAPP dans un système de gestion d'agent de collecte (Collection Agent Management System), CAMS, créer (403) une entité de plugin d'agent de collecte (Collection Agent Plugin Entity), CAPE, correspondant au CAPP; où la CAPE est configurée pour établir une liaison de communication avec l'interface northbound du système géré, collecter les données du système géré et surveiller les messages signalés à l'initiative du système géré, et où le CAMS est configuré pour analyser les commandes du système de gestion de réseau, NMS, provenant de l'interface northbound du CAMS et transmettre les commandes NMS analysées au CAPP et à la CAPE; et
effectuer (404), via la CAPE créée, une communication de données entre le système géré et un système de gestion de réseau, NMS;
où l'effectuation (404), via la CAPE créée, de la communication de données entre le système géré et le NMS comprend: lorsque la CAPE est dans un état connecté, la CAPE reçoit une commande de collecte de données de service émise par le NMS via une interface northbound du CAMS; la CAPE collecte, via une interface northbound du système géré, les données indiquées par la commande de collecte de données de service, et après avoir analysé les données collectées en données de format unifié qui peuvent être reconnues par le NMS, signale les données de format unifié au NMS via l'interface northbound du CAMS.

2. Procédé de gestion d'adaptateur de collecte tel que revendiqué dans la revendication 1, dans lequel le fichier de modèle de données de service comprend un fichier de modèle d'élément de réseau, un fichier de modèle d'alarme et un fichier de modèle de performance, et le procédé consiste en outre à:
créer (401) un modèle d'élément de réseau unifié, un modèle d'alarme unifié et un modèle de performance unifié pour un réseau de service spécifique.

3. Procédé de gestion d'adaptateur de collecte tel que revendiqué dans la revendication 1, dans lequel après l'installation du CAPP dans le CAMS, la création de la CAPE correspondant au CAPP comprend:
la création (403) de la CAPE correspondant au CAPP et la configuration d'un paramètre de configuration de la CAPE en fonction des informations associées du système géré correspondant au CAPP.

4. Procédé de gestion d'adaptateur de collecte tel que revendiqué dans la revendication 1, comprenant en outre: l'installation d'un nouveau CAPP en ligne dans le CAMS.

5. Procédé de gestion d'adaptateur de collecte tel que revendiqué dans la revendication 4, où l'installation du nouveau CAPP en ligne dans le CAMS consiste à:
analyser le fichier de modèle de données de service dans le CAPP en données de modèle unifié qui peuvent être reconnues à la fois par le NMS et le CAMS.

6. Procédé de gestion d'adaptateur de collecte tel que revendiqué dans la revendication 4, consistant en outre à:
désinstaller le nouveau CAPP installé du CAMS.

7. Système de gestion d'adaptateur de collecte, comprenant:
un composant d'encapsulation (501), configuré pour encapsuler un programme d'adaptation d'interface northbound d'un système géré, un fichier de modèle de données de service du système géré et un fichier dépendant de l'interface northbound du système géré dans un paquage de plugin d'agent de collecte, CAPP suivant une spécification d'interface unifiée;
un composant de gestion CAPE (502), configuré pour, après l'installation du CAPP dans un système de gestion d'agent de collecte, CAMS, créer une entité de plugin d'agent de collecte, CAPE, correspondant au CAPP; où la CAPE est responsable d'établir une liaison de communication avec l'interface northbound du système géré, de collecter les données du système géré et de surveiller les messages signalés à l'initiative du système géré, et où le CAMS est responsable de l'analyse des commandes du système de gestion de réseau, NMS, provenant de l'interface northbound du CAMS et de la transmission des commandes NMS analysées au CAPP et à la CAPE;
un composant de communication (503), configuré pour effectuer, via la CAPE créée, une communication de données entre le système géré et un système de gestion de réseau, NMS;
où le composant de communication (503) est en outre configuré de telle sorte que: lorsque la CAPE est dans un état connecté, la CAPE est adaptée pour recevoir une commande de collecte de données de service émise par le NMS via une interface northbound du CAMS; la CAPE est adaptée pour collecter, via une interface northbound du système géré, les données indiquées par la commande de collecte de données de service, et après avoir analysé les données collectées dans des données de format unifié qui peuvent être reconnues par le NMS, est en outre adaptée pour signaler les données de format unifié au NMS via l'interface northbound du CAMS.

8. Système de gestion d'adaptateur de collecte tel que revendiqué dans la revendication 7, comprenant en outre:
un composant de gestion CAPP (504), configuré pour installer un nouveau CAPP en ligne dans le CAMS.

9. Système de gestion d'adaptateur de collecte tel que revendiqué dans la revendication 8, dans lequel le composant de gestion CAPP (504) est en outre configuré pour désinstaller le nouveau CAPP installé du CAMS.
